(19) **Europäisches Patentamt / European Patent Office / Office européen des brevets**

(11) **EP 4 737 501 A1**

(12) **EUROPEAN PATENT APPLICATION**
published in accordance with Art. 153(4) EPC

(43) Date of publication:
06.05.2026   Bulletin 2026/19

(21) Application number: 24832289.3

(22) Date of filing: 31.05.2024

(51) International Patent Classification (IPC):
$C08G\ 63/16$ (2006.01)   $C08G\ 63/78$ (2006.01)
$C08J\ 5/18$ (2006.01)

(52) Cooperative Patent Classification (CPC):
C08G 63/16; C08G 63/78; C08J 5/18

(86) International application number:
PCT/KR2024/007453

(87) International publication number:
WO 2025/005507 (02.01.2025 Gazette 2025/01)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority:   30.06.2023   KR 20230085267

(71) Applicants:
• Kolon Industries, Inc.
Seoul 07793 (KR)
• SK Innovation Co., Ltd.
Seoul 03188 (KR)

(72) Inventors:
• IM, Sujin
Seoul 07793 (KR)
• KIM, Jeongsun
Seoul 07793 (KR)
• YOON, Hoewon
Seoul 07793 (KR)
• KIM, Seonghun
Seoul 07793 (KR)
• PAEK, Seunghwan
Seoul 07793 (KR)
• LEE, Sung Won
Seoul 03188 (KR)
• NAM, Joo Hyun
Seoul 03188 (KR)
• SHIN, Hyo Joo
Seoul 03188 (KR)

(74) Representative: Vossius & Partner
Patentanwälte Rechtsanwälte mbB
Siebertstraße 3
81675 München (DE)

(54) **BIODEGRADABLE POLYESTER RESIN AND PREPARATION METHOD THEREFOR**

(57) The present invention relates to a biodegradable polyester resin composition, a preparation method therefor, and a biodegradable polyester film prepared from the composition, wherein the biodegradable polyester resin composition comprises a polymer comprising a residue of a dicarboxylic acid component and a residue of a diol component, and the polymer has a degree of linearity of 0.3 to 0.7, the degree of linearity being represented by equation 1: [Equation 1] Degree of linearity = $Log(R_g) / Log(MM)$, ($R_g \leq 30$ nm). In equation 1, $R_g$ represents the rotational radius of the polymer and is 30 nm or less, and MM represents the molar mass of the polymer.

**EP 4 737 501 A1**

【Fig. 1】

# EP 4 737 501 A1

**Description**

CROSS-REFERENCE TO RELATED APPLICATION

This application claims the benefit of Korean Patent Application No. 10-2023-0085267, filed on June 30, 2023, in the Korean Intellectual Property Office, the disclosure of which is incorporated herein in its entirety by reference.

BACKGROUND

1. Field

The present disclosure relates to a biodegradable polyester resin and a method of preparing the same.

2. Description of Related Art

Polyester resin refers to a polymer resin that has an ester (RO-C(=O)-R') functional group in the main chain, and is used in various applications across multiple industries, such as packaging, displays, and insulating materials. Recently, considering environmental protection issues, research on biodegradable polyester compositions is continuing.

In general, the biodegradable polyester compositions are prepared using an aliphatic dicarboxylic acid, an aromatic dicarboxylic acid, and an aliphatic diol as main raw materials and branching agents, catalysts, and heat stabilizers as auxiliary raw materials.

Specifically, a biodegradable polyester resin is prepared by subjecting the main raw materials to an esterification reaction and a polycondensation reaction in the presence of the auxiliary raw materials, and in some cases, a chain extension reaction is also performed after the polycondensation reaction to enhance the mechanical properties of the biodegradable polyester resin. In addition, the physical properties of the final biodegradable polyester resin may vary depending on the properties of the raw material mixture used in the preparation of biodegradable polyester.

SUMMARY

According to one embodiment, a biodegradable polyester resin composition having excellent processability and mechanical properties is provided.

According to another embodiment, a method of preparing the biodegradable polyester resin composition is provided, which can improve the productivity and processability of the biodegradable polyester resin composition.

[Technical Solution]

A biodegradable polyester resin composition according to one embodiment includes a polymer including a residue of a dicarboxylic acid component and a residue of a diol component, wherein the polymer has a degree of linearity of 0.3 to 0.7, as expressed by the following Equation 1:

$$[\text{Equation 1}]$$

$$\text{Degree of linearity} = \text{Log}(R_g) / \text{Log}(MM), (R_g \leq 30 \text{ nm})$$

in Equation 1,

$R_g$ is a radius of gyration of the polymer, which is 30 nm or less, and
MM is a molar mass of the polymer.

The polymer has a polydispersity index (PDI) of 1.0 to 2.5.

The dicarboxylic acid component may include an aromatic dicarboxylic acid having 6 to 12 carbon atoms and an aliphatic dicarboxylic acid having 4 to 10 carbon atoms, wherein the aromatic dicarboxylic acid having 6 to 12 carbon atoms may include terephthalic acid, isophthalic acid, furandicarboxylic acid, naphthalenedicarboxylic acid, diester derivatives thereof, anhydrides thereof, or mixtures thereof, and the aliphatic dicarboxylic acid having 4 to 10 carbon atoms may include adipic acid, succinic acid, glutaric acid, azelaic acid, sebacic acid, cyclic fatty acids, diester derivatives thereof, anhydrides thereof, or mixtures thereof.

The dicarboxylic acid component may include 30 mol% to 70 mol% of the aromatic dicarboxylic acid having 6 to 12 carbon atoms and 30 mol% to 70 mol% of the aliphatic dicarboxylic acid having 4 to 10 carbon atoms, based on the total amount of the dicarboxylic acid component.

The diol may include an aliphatic diol having 2 to 10 carbon atoms, and the aliphatic diol having 2 to 10 carbon atoms may include 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or mixtures thereof.

A molar ratio of the dicarboxylic acid component and the diol component is 1.0:0.8 to 1.0:1.2.

The biodegradable polyester resin composition has a melt flow index (MI) of 10 g/10 min or less as measured at 190°C under a load of 2.16 kg according to the ASTM D1238 standard.

A method of preparing a biodegradable polyester resin composition according to another embodiment includes a first step of preparing a raw material mixture including an aromatic dicarboxylic acid, an aliphatic dicarboxylic acid, and an aliphatic diol; a second step of reacting the raw material mixture to prepare an oligomer; a third step of subjecting the oligomer to polycondensation to prepare a prepolymer; and a fourth step of adding a chain extender to the prepolymer to prepare a polymer, thereby obtaining a biodegradable polyester resin composition, wherein a moisture content of the raw material mixture in the first step is 3000 ppm or less, and the polymer prepared in the fourth step has a degree of linearity of 0.3 to 0.7, as expressed by Equation 1.

The polymer has a PDI of 1.0 to 2.5.

A particle size dispersion index (SPAN) of the aromatic dicarboxylic acid is 5.0 or less.

A end-group conversion rate of the oligomer is expressed by the following Equation 2, and the end-group conversion rate is 90% to 100%:

[Equation 2]

$$\text{End-group conversion rate (\%)} = \frac{SV - AV}{SV} \times 100$$

in Equation 2,

AV is an acid value expressed by the following Equation 2-1, and
SV is a saponification value expressed by the following Equation 2-2:

[Equation 2-1]

$$\text{Acid value (AV)} = \frac{0.1 \times A \times P}{W}$$

in Equation 2-1, A is a titration volume (ml) of a 0.1 N sodium hydroxide solution, P is a titer of the 0.1 N sodium hydroxide solution, and W is a mass of the oligomer; and

[Equation 2-2]

$$\text{Saponification value (SV)} = \frac{0.5 \times (C - B) \times Q}{W'}$$

in Equation 2-2, B is a titration volume (ml) of a 0.5 N hydrochloric acid solution (HCl), C is a titration volume (ml) of a blank solution, Q is a titer of the 0.5 N hydrochloric acid solution, and W' is a mass of the oligomer.

The aromatic dicarboxylic acid may be terephthalic acid, isophthalic acid, furandicarboxylic acid, naphthalenedicarboxylic acid, diester derivatives thereof, anhydrides thereof, or combinations thereof, and the aliphatic dicarboxylic acid is adipic acid, succinic acid, glutaric acid, azelaic acid, sebacic acid, cyclic fatty acids, diester derivatives thereof, anhydrides thereof, or combinations thereof.

The aromatic dicarboxylic acid may be included in an amount of 20 mol% to 50 mol% and the aliphatic dicarboxylic acid may be included in an amount of 20 mol% to 50 mol%, based on the total number of moles of the raw material mixture.

The aliphatic diol may be 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or combinations thereof.

The aliphatic diol may be included in an amount of 30 mol% to 60 mol% based on the total number of moles of the raw material mixture.

A molar ratio of the aromatic dicarboxylic acid and aliphatic dicarboxylic acid and the aliphatic diol is 1.0:0.8 to 1.0:1.2.

A biodegradable polyester film according to still another embodiment may be obtained by melt-extruding the above-described biodegradable polyester resin composition using a blown film extruder. In addition, a biodegradable polyester film may be obtained by melt-extruding a biodegradable polyester resin composition prepared by the above-described preparation method using a blown film extruder.

[Advantageous Effects]

A polyester resin composition according to one embodiment can have improved productivity and processability.

A method of preparing a polyester resin composition according to another embodiment can uniformly control the reaction rate of each process and suppress side reactions.

A polyester film manufactured from a polyester resin composition according to one embodiment can secure excellent tensile strength, elongation, and tear strength.

BRIEF DESCRIPTION OF THE DRAWINGS

    FIG. 1 is a graph for deriving the degree of linearity of a polymer according to Example 1.
    FIG. 2 is a graph for deriving the degree of linearity of a polymer according to Comparative Example 2.

DETAILED DESCRIPTION

The advantages and features of the technology described below and methods of achieving the same should become clear from embodiments described in detail below with reference to the accompanying drawings. However, the forms of implementation are not limited to the embodiments disclosed below. Unless otherwise defined, all terms (including technical and scientific terms) used in the present specification may be used in a meaning commonly understood by those of ordinary skill in the art to which the present invention belongs. In addition, terms defined in commonly used dictionaries are not interpreted ideally or excessively unless explicitly specifically defined.

Throughout the present specification, when a part is said to "include" a component, this means that other components may be further included, not excluded, unless specifically stated otherwise. A singular expression also includes a plural expression unless the context clearly indicates otherwise.

Based on the above definitions, embodiments of the present invention will be described in detail. However, they are provided as examples, the present invention is not limited thereto, and the present invention is defined only by the scope of the claims to be described later.

[Biodegradable polyester resin composition]

A biodegradable polyester resin composition according to one embodiment includes a polymer including a residue of a dicarboxylic acid component and a residue of a diol component, wherein the polymer satisfies a degree of linearity of 0.3 to 0.7, as expressed by the following Equation 1:

[Equation 1]

$$\text{Degree of linearity} = \text{Log}(R_g) / \text{Log}(MM), (R_g \le 30 \text{ nm})$$

In Equation 1, $R_g$ is a radius of gyration of the polymer, and MM is a molar mass of the polymer. Equation 1 effectively determines degree of linearity in the range where $R_g$ is 30 nm or less.

In Equation 1, the radius of gyration ($R_g$) and the molar mass (MM) of the polymer are measured using a multi-angle light scattering (SEC-MALS) detector.

The degree of linearity expressed by Equation 1 is a value calculated when the radius of gyration ($R_g$) of the polymer is 30 nm or less, and the degree of linearity is 0.3 to 0.7, for example, 0.3 to 0.68, for example, 0.3 to 0.66, for example, 0.3 to 0.65, for example, 0.32 to 0.7, for example, 0.33 to 0.7, but is not limited thereto.

Since the polymer included in the biodegradable polyester resin composition satisfies Equation 1, the productivity and processability of the composition can be improved, and the tensile strength, elongation, and tear strength of the biodegradable polyester film manufactured therefrom can be improved.

In one embodiment, the dicarboxylic acid component included in the biodegradable polyester resin composition includes an aromatic dicarboxylic acid having 6 to 12 carbon atoms and an aliphatic dicarboxylic acid having 4 to 10 carbon atoms.

The aromatic dicarboxylic acid is terephthalic acid, isophthalic acid, furandicarboxylic acid, naphthalenedicarboxylic acid, diester derivatives thereof, anhydrides thereof, or combinations thereof, for example, terephthalic acid, isophthalic acid, diester derivatives thereof, or combinations thereof, but is not limited thereto.

The aliphatic dicarboxylic acid is adipic acid, succinic acid, glutaric acid, azelaic acid, sebacic acid, cyclic fatty acids, diester derivatives thereof, anhydrides thereof, or combinations thereof, for example, adipic acid, succinic acid, diester derivatives thereof, or combinations thereof, but is not limited thereto.

In one embodiment, the dicarboxylic acid component may include 30 mol% to 70 mol% of the aromatic dicarboxylic acid having 6 to 12 carbon atoms and 30 mol% to 70 mol% of the aliphatic dicarboxylic acid having 4 to 10 carbon atoms, based on the total amount of the dicarboxylic acid component.

In one embodiment, the diol component includes an aliphatic diol, wherein the aliphatic diol is 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or combinations thereof, but is not limited thereto.

In one embodiment, a molar ratio of the aromatic dicarboxylic acid and aliphatic dicarboxylic acid and the aliphatic diol included in the biodegradable polyester resin composition is 1.0:0.8 to 1.0:1.2, for example, 1.0:0.8 to 1.0:1.15, for example, 1.0:1.1, but is not limited thereto.

In one embodiment, the biodegradable polyester resin composition has a melt flow index (MI) of 10 g/10 min or less as measured at 190°C under a load of 2.16 kg according to the ASTM D1238 standard. The melt flow index is 10 g/10 min or less, for example, 8 g/10 min or less, for example, 6 g/10 min or less, for example, 5 g/10 min or less, but is not limited thereto. When the melt flow index satisfies the above range, the productivity and processability of the composition can be improved, and the tensile strength, elongation, and tear strength of the biodegradable polyester film manufactured therefrom can be improved.

In one embodiment, the polydispersity index (PDI) of the polymer included in the resin composition is 1.0 to 2.5, for example, 1.2 to 2.5, for example, 1.4 to 2.5, for example, 1.6 to 2.5, for example, 1.8 to 2.5, but is not limited thereto.

When the polydispersity index of the polymer in the composition satisfies the above range, the tensile strength, elongation, and tear strength of a biodegradable polyester resin film formed from the composition can be improved.

**[Method of preparing biodegradable polyester composition]**

A method of preparing a biodegradable polyester resin composition according to another embodiment includes a first step of preparing a raw material mixture including an aromatic dicarboxylic acid, an aliphatic dicarboxylic acid, and an aliphatic diol; a second step of reacting the raw material mixture to prepare an oligomer; a third step of subjecting the oligomer to polycondensation to prepare a prepolymer; and a fourth step of adding a chain extender to the prepolymer to obtain a biodegradable polyester resin composition, wherein a moisture content of the raw material mixture in the first step is 3000 ppm or less, and the polymer prepared in the fourth step has a degree of linearity of 0.3 to 0.7, as expressed by the following Equation 1:

[Equation 1]

$$\text{Degree of linearity} = \text{Log}(R_g) / \text{Log}(MM), (R_g \leq 30 \text{ nm})$$

In Equation 1, $R_g$ is a radius of gyration of the polymer, and MM is a molar mass of the polymer. Equation 1 effectively determines the degree of linearity in the range where $R_g$ is 30 nm or less.

A biodegradable polyester resin composition prepared by the preparation method may be the same as the above-described embodiment, any description overlapping the above-described content will be omitted below, and the preparation method of the embodiment will be described step by step.

First step

In the first step, a raw material mixture including an aromatic dicarboxylic acid, an aliphatic dicarboxylic acid, and an aliphatic diol is prepared.

A content of moisture included in the raw material mixture is measured using a Karl Fischer titrator, and specifically, the moisture content (%) is calculated using the following Equation 3 by titrating with a Karl Fischer reagent (KFR).

[Formula 3]

$$\frac{(T - S) \times R}{M} \times 100$$

In Equation 3, T is a volume (ml) of the Karl Fischer reagent consumed in sample titration, S is a volume (ml) of the Karl Fischer reagent consumed in blank titration, R is a titer (mg/ml) of the Karl Fischer reagent, and M is a mass (mg) of a sample.

In one embodiment, the content of moisture included in the raw material mixture is 3000 ppm or less, for example, 2900 ppm or less, for example, 2800 ppm or less, for example, 2600 ppm or less, for example, 2200 ppm or less, but is not limited thereto. In addition, the content of moisture included in the raw material mixture is 1400 ppm or more, for example, 1500 ppm or more, but is not limited thereto.

When the moisture content of the raw material mixture does not satisfy the above range, catalytic activity may be reduced during the preparation process of a resin composition and hydrolysis of the resin composition may be induced, thereby deteriorating the physical properties of a biodegradable polyester resin film formed therefrom. When the moisture content of the raw material mixture satisfies the above range, the biodegradable polyester resin composition may be uniform.

In one embodiment, the particle size dispersion index (SPAN) of the aromatic dicarboxylic acid included in the raw material mixture is 5.0 or less, for example, 4.5 or less, for example, 4.0 or less, for example, 3.5, but is not limited thereto. In addition, the SPAN of the aromatic dicarboxylic acid is 0.5 or more, for example, 1.0 or more, for example, 1.5 or more, but is not limited thereto.

The SPAN of the aromatic dicarboxylic acid may be measured using a particle size analyzer (Beckman Coulter, LS13320 XR, Dry powder module).

When the SPAN of the aromatic dicarboxylic acid falls within the above range, the biodegradable polyester resin composition may be uniform.

In one embodiment, the aromatic dicarboxylic acid is terephthalic acid, isophthalic acid, furandicarboxylic acid, naphthalenedicarboxylic acid, diester derivatives thereof, anhydrides thereof, or combinations thereof, for example, terephthalic acid, isophthalic acid, diester derivatives thereof, or combinations thereof, but is not limited thereto.

In one embodiment, the aliphatic dicarboxylic acid is adipic acid, succinic acid, glutaric acid, azelaic acid, sebacic acid, cyclic fatty acids, diester derivatives thereof, anhydrides thereof, or combinations thereof, for example, adipic acid, succinic acid, diester derivatives thereof, or combinations thereof, but is not limited thereto.

In one embodiment, the aromatic dicarboxylic acid is present in an amount of 20 mol% to 50 mol%, for example, 20 mol% to 45 mol%, for example, 20 mol% to 40 mol%, for example, 20 mol% to 35 mol%, for example, 20 mol% to 30 mol%, based on the total number of moles of the raw material mixture, but is not limited thereto.

In one embodiment, the aliphatic dicarboxylic acid is present in an amount of 20 mol% to 50 mol%, for example, 20 mol% to 45 mol%, for example, 20 mol% to 40 mol%, for example, 20 mol% to 35 mol%, for example, 20 mol% to 30 mol%, based on the total number of moles of the raw material mixture, but is not limited thereto.

In one embodiment, the aliphatic diol is 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or combinations thereof, but is not limited thereto.

In one embodiment, the aliphatic diol is present in an amount of 30 mol% to 60 mol%, for example, 30 mol% to 55 mol%, for example, 35 mol% to 55 mol%, for example, 40 mol% to 60 mol%, for example, 40 mol% to 55 mol%, for example, 50 mol%, based on the total number of moles of the raw material mixture, but is not limited thereto.

In one embodiment, a molar ratio of the aromatic dicarboxylic acid and aliphatic dicarboxylic acid and the aliphatic diol is 1.0:0.8 to 1.0:1.2, for example, 1.0:0.8 to 1.0:1.15, for example, 1.0:1.1, but is not limited thereto.

In another embodiment, the raw material mixture may additionally include compounds, such as a branching agent and a catalyst, to improve the physical properties of the biodegradable polyester resin composition.

For example, the branching agent may include a hydroxyl group (-OH), a carboxyl group (-COOH), or an anhydride as a crosslinkable functional group. Specifically, the branching agent includes glycerol, trimethylolpropane, pentaerythritol, and the like. The branching agent may be added not only in the first step, but also in the latter half of the second step or the latter half of the third step.

For example, the catalyst may be a titanium (Ti)-based catalyst, and the titanium (Ti)-based catalyst may include a titanium (Ti)-based esterification catalyst, a titanium (Ti)-based polycondensation catalyst, or combinations thereof. The titanium (Ti)-based esterification catalyst may include an organic acid chelated titanium compound or an inorganic titanium compound. The titanium (Ti)-based polycondensation catalyst may include a titanium tetraalkoxide compound or a combination thereof.

By further including the titanium (Ti)-based catalyst in the raw material mixture, oligomers of uniform size may be prepared, thereby preventing unreacted materials.

Second step

In the second step, the raw material mixture is reacted to prepare an oligomer. In order to prevent thermal decomposition in the second step, the reaction must be efficiently performed in a short period of time. When the temperature at which the second step is performed is too low, the residence time may be long and unreacted materials may be generated. When the reaction temperature is too high, decomposition of the diol, particularly 1,4-butanediol, among the reactants may occur to generate THF, which prevents sufficient participation of 1,4-butanediol in the reaction, leading to the generation of unreacted materials.

The second step is performed in a temperature range of 190 °C to 230 °C, thereby minimizing macromolecules or aggregates within the final biodegradable polyester composition. Specifically, in the second step, the esterification reaction of the raw material mixture is performed by applying a low vacuum in a temperature range of 190 to 230 °C, and byproducts such as water ($H_2O$) and side products may be removed from the system through a rectification tower to obtain an oligomer.

In one embodiment, the end-group conversion rate of the oligomer in the third step is expressed by the following Equation 2, and the end-group conversion rate is 90% to 100%.

[Equation 2]

$$\text{End-group conversion rate (\%)} = \frac{SV - AV}{SV} \times 100$$

In Equation 2, an acid value (AV) is the acid value expressed by the following Equation 2-1, and a saponification value (SV) is the saponification value expressed by the following Equation 2-2:

[Equation 2-1]

$$\text{Acid value (AV)} = \frac{0.1 \times A \times P}{W}$$

In Equation 2-1, A is a titration volume (ml) of a 0.1 N sodium hydroxide solution, P is a titer of the 0.1 N sodium hydroxide solution, and W is a mass (g) of the oligomer; and

[Equation 2-2]

$$\text{Saponification value (SV)} = \frac{0.5 \times (C - B) \times Q}{W'}$$

In Equation 2-2, B is a titration volume (ml) of a 0.5 N hydrochloric acid solution (HCl), C is a titration volume (ml) of a blank solution, Q is a titer of the 0.5 N hydrochloric acid solution, and W' is a mass (g) of the oligomer.

The end-group conversion rate of the oligomer is 90% to 100%, for example, 91% to 100%, for example, 93% to 100%, for example, 95% to 100%, for example, 96% to 100%, but is not limited thereto.

Since the end-group conversion rate of the oligomer satisfies the above range, the reaction rate of the above preparation process can be uniformly controlled, and side reactions can be suppressed, so that the biodegradable polyester resin composition may be uniform.

Third step

In the third step, the oligomer may be subjected to polycondensation to prepare a prepolymer. In order to prevent thermal decomposition in the third step, the reaction may be efficiently performed in a short period of time. When the temperature at which the third step is performed is too high, the thermal decomposition reaction may be dominant over the polycondensation reaction, resulting in the generation of decomposition products and a longer residence time.

In this regard, the third step is performed in a temperature range of 210 °C to 250 °C and under a vacuum of 1 torr or less, thereby minimizing byproducts generated by thermal decomposition in the final biodegradable polyester composition.

Accordingly, a prepolymer having a melt flow index (MI) of 5 g/10 min to 60 g/10 min as measured at 190 °C under a load of 2.16 kg according to the ASTM D1238 standard may be obtained.

In one embodiment, in the third step, a heat stabilizer may be further added to the reaction.

For example, the heat stabilizer may be a phosphorus (P)-based heat stabilizer, such as trimethyl phosphonoacetate, triethyl phosphonoacetate, phosphoric acid, phosphorous acid, polyphosphric acid, trimethyl phosphate (TMP), triethyl phosphate, trimethyl phosphine, triphenyl phosphine, or combinations thereof.

By adding the P-based thermal stabilizer, thermal decomposition may be prevented without reducing the activity of the catalyst.

Fourth step

In the fourth step, a chain extender may be added to the prepolymer to obtain a polymer, and a polyester resin composition with further increased viscosity may be obtained.

In the fourth step, when the prepolymer and the chain extender are mixed at a high speed or with high shear for a smooth reaction, the shear stress may increase, which may cause decomposition. When the reaction is performed at a high temperature, thermal decomposition may occur, which rapidly increases the molecular weight distribution of the final biodegradable polyester.

Therefore, it is preferable that the fourth step is performed in a temperature range of 120 °C to 250 °C for 0 to 30 minutes using a static mixer or a dynamic mixer.

**[Biodegradable polyester film]**

A biodegradable polyester film according to another embodiment may be obtained by melt-extruding the above-described biodegradable polyester resin composition using a blown film extruder, and a biodegradable polyester film according to still another embodiment may be obtained by melt-extruding a biodegradable polyester resin composition prepared by the above-described preparation method using a blown film extruder, and the manufacturing process of the biodegradable polyester film is not limited thereto.

The biodegradable polyester film obtained above has a thickness of 30 $\mu$m to 70 $\mu$m, for example, 30 $\mu$m to 60 $\mu$m, for example, 40 $\mu$m to 70 $\mu$m, for example, 40 $\mu$m to 60 $\mu$m, for example, 50 $\mu$m, but is not limited thereto.

Hereinafter, the present invention will be described with reference to examples, but the following examples are intended to illustrate the present invention, and the scope of the present invention is not limited to these examples.

**Preparation of biodegradable polyester resin composition**

**Example 1**

First step: 24 mol% of terephthalic acid (TPA), 26 mol% of adipic acid (AA), and 50 mol% of 1,4-butanediol (1,4-BDO) were stirred to prepare a raw material mixture. The SPAN of the terephthalic acid and the content of moisture included in the raw material mixture are as shown in Table 1 below.

Second step: A titanium-based catalyst, tetrabutyl titanate, was input to the raw material mixture of the first step, and subjected to an esterification reaction at 220 °C and low vacuum (650 mbar) while removing the generated effluent using a rectification tower, thereby preparing an oligomer. The end-group conversion rate of the oligomer in the second step is as shown in Table 1 below.

Third step: The reaction mixture obtained through the second step was heated to 250 °C, and then subjected to polycondensation at 1 torr or less, and the reaction was terminated when the discharge load was reached to obtain a prepolymer having a number average molar mass of 35,000 g/mol.

Fourth step: After drying the obtained biodegradable polyester prepolymer, a chain extension process was performed using a mixer to form a polymer having the properties shown in Table 2 below, thereby obtaining a final biodegradable polyester resin composition including the same.

**Examples 2 to 6**

Biodegradable polyester resin compositions were prepared by changing the properties of raw materials as shown in Table 1 below.

**Comparative Examples 1 to 4**

Biodegradable polyester resin compositions were prepared by changing the properties of raw materials as shown in Table 1 below.

**Experimental Example 1: Physical properties of raw material mixture**

Moisture content in raw material mixture: The mixture was titrated with a Karl Fischer reagent (KFR) using a Karl Fischer titrator to calculate the moisture content (%) using the following Equation 3.

[Formula 3]

$$\frac{(T-S) \times R}{M} \times 100$$

In Equation 3, T is a volume (ml) of the Karl Fischer reagent consumed in sample titration, S is a volume (ml) of the Karl Fischer reagent consumed in blank titration, R is a titer (mg/ml) of the Karl Fischer reagent, and M is a mass (mg) of a raw material mixture sample.

SPAN of aromatic dicarboxylic acid: The SPAN was measured using a particle size analyzer (Beckman Coulter, LS 13320 XR, Dry powder module), and calculated using Equation 4 below.

$$[\text{Equation 4}]$$

$$\text{SPAN} = (\text{D90 - D10}) / \text{D50}$$

In Equation 4, D90 refers to a particle size at which the volume accumulation corresponds to 90% from the side with a smaller particle size in the cumulative curve of the particle size distribution, D10 refers to a particle size at which the volume accumulation corresponds to 10% from the side with a smaller particle size, and D50 refers to a particle size at which the volume accumulation corresponds to 50% from the side with a smaller particle size.
The moisture content in the raw material mixture and the SPAN of the aromatic dicarboxylic acid obtained above are as shown in Table 1 below.

**Experimental Example 2: Measurement of end-group conversion rate of oligomer**

Measurement of acid value (AV)

A sample solution in which 50 ml of dimethylformamide (DMF) was input into 0.2 g of each oligomer sample of Examples 1 to 6 and Comparative Examples 1 to 4, and 50 ml of a dimethylformamide solvent (hereinafter, referred to as a blank solution) not including the sample were prepared. The oligomer was dissolved in an ultrasonic bath for dissolution at 85 °C to 90 °C for 1 hour and then cooled at room temperature. 2 to 3 drops of 0.1% rosolic acid were added to each of the sample solution and the blank solution, and titrated with a N/10-NaOH methanol solution. The end point refers to the moment when the color changes from pale yellow to light purple, and the acid value is calculated using the following Equation 2-1:

$$[\text{Equation 2-1}]$$

$$\text{Acid value (AV)} = \frac{0.1 \times A \times P}{W}$$

In Equation 2-1, A is a titration volume (ml) of the 0.1 N sodium hydroxide solution, P is a titer of the 0.1 N sodium hydroxide solution, and W is a mass (g) of the oligomer.

Measurement of saponification value (SV)

20 ml of a 0.5 N KOH alcohol solution was input into 0.4 g of each oligomer sample of Examples 1 to 6 and Comparative Examples 1 to 4, 2 to 3 boiling stones were added thereto to prepare a sample solution, and 2 to 3 boiling stones were added to 20 ml of a 0.5 N KOH alcohol solution not including the sample to prepare a blank solution. The sample solution and blank solution were hydrolyzed for 40 minutes in a 110 °C oil bath equipped with a cooling condenser. 15 ml of distilled water was input, mixed thoroughly, and cooled at room temperature. Thereafter, 3 to 4 drops of 0.1% phenolphthalein were added to each of the sample solution and the blank solution, and then titrated with 0.5 N HCl. The end point refers to the moment when the color changes from pink to colorless, and the saponification value is calculated using the following Equation 2-2:

$$[\text{Equation 2-2}]$$

$$\text{Saponification value (SV)} = \frac{0.5 \times (C - B) \times Q}{W'}$$

In Equation 2-2, B is a titration volume (ml) of the 0.5 N hydrochloric acid solution (HCl), C is a titration volume (ml) of the blank solution, Q is a titer of the 0.5 N hydrochloric acid solution, and W' is a mass (g) of the oligomer.

Derivation of end-group conversion rate (%)

The acid value (AV) and saponification value (SV) obtained above were applied to Equation 2 below to obtain the end-group conversion rate of the oligomer:

[Equation 2]

$$\text{End-group conversion rate (\%)} = \frac{SV - AV}{SV} \times 100$$

The end-group conversion rate of the oligomer obtained by the above method is as shown in Table 1 below:

[Table 1]

|  | Example 1 | Example 2 | Example 3 | Example 4 | Example 5 | Example 6 |
|---|---|---|---|---|---|---|
| 1,4-BDO (mol%) | 50 | 50 | 50 | 50 | 50 | 50 |
| TPA (mol%) | 24 | 24 | 24 | 24 | 24 | 24 |
| AA (mol%) | 26 | 26 | 26 | 26 | 26 | 26 |
| SPAN of TPA | 1.79 | 3.11 | 2.07 | 2.64 | 2.7 | 1.87 |
| Moisture content in raw material mixture (ppm) | 1480 | 1610 | 2850 | 1560 | 2130 | 2540 |
| End-group conversion rate (%) | 98.4 | 98.9 | 98.7 | 96.4 | 91.5 | 99.9 |

(Table 1 continued)

|  | Comparative Example 1 | Comparative Example 2 | Comparative Example 3 | Comparative Example 4 |
|---|---|---|---|---|
| 1,4-BDO (mol%) | 50 | 50 | 50 | 50 |
| TPA (mol%) | 24 | 24 | 24 | 24 |
| AA (mol%) | 26 | 26 | 26 | 26 |
| SPAN of TPA | 5.54 | 8.93 | 2.33 | 2.5 |
| Moisture content in raw material mixture (ppm) | 2080 | 1350 | 5000 | 5000 |
| End-group conversion rate (%) | 97.0 | 98.1 | 93.1 | 83.4 |

**Experimental Example 3: Physical properties of biodegradable polyester resin composition**

The physical properties of the biodegradable polyester resin compositions of the examples and comparative examples were evaluated by the following methods, and the results are as shown in Table 2 below.

Melt flow index (MI): Based on the ASTM D1238 standard, the weight of polyester discharged through an extrusion viscometer orifice at 190 °C for 10 minutes under a load of 2.16 kg after sample loading was measured.

Polydispersity index (PDI): The PDI was measured by gel permeation chromatography (GPC, Agilent, Technology 1200 Series), and chloroform was used as a solvent and polystyrene was used as a standard. The column and detector temperatures were set to 40 °C and the measurement was performed at a flow rate of 1 mL/min.

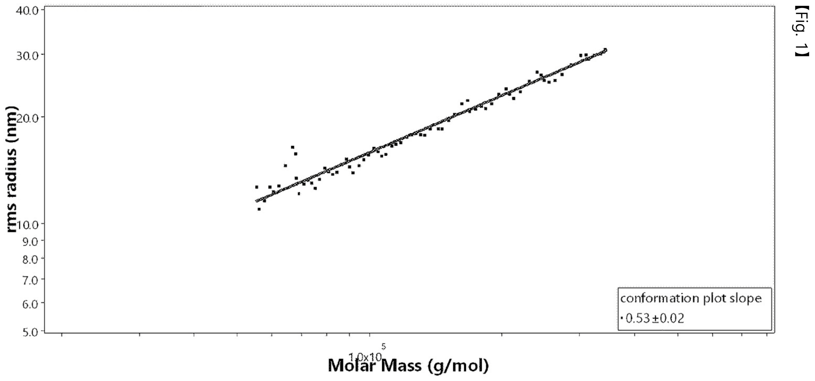

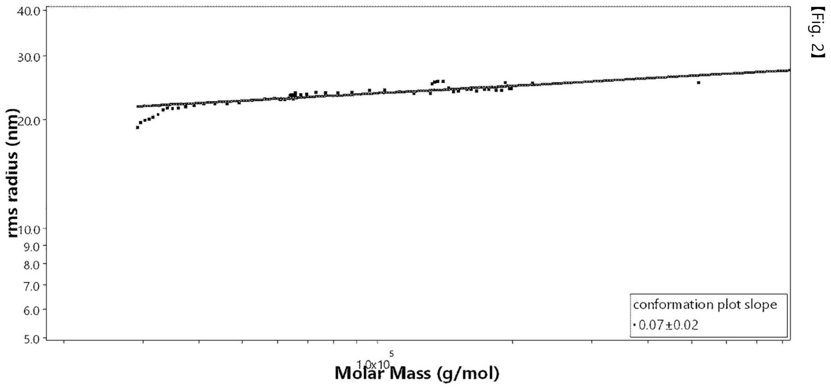

Degree of linearity: The degree of linearity was measured using a size exclusion chromatography-multi-angle light scattering detector (Wyatt, model name: DAWN) using chloroform as a solvent, under the conditions of a column oven temperature of 40 °C, a flow rate of 1 ml/min, a sample concentration of 10.0 mg/ml, and a wavelength of 659 nm. The degree of linearity of the polymer of Example 1 was obtained through the mass-radius of gyration graph of FIG. 1, and the degree of linearity of the polymer of Comparative Example 2 was obtained through the mass-radius of gyration graph of FIG. 2. The degree of linearity of the remaining samples was also obtained using the same method.

**Experimental Example 4: Physical properties of biodegradable polyester film**

The biodegradable polyester resin compositions obtained in the above examples and comparative examples were melt-extruded using a blown film extruder to manufacture 50 $\mu$m biodegradable polyester films, the physical properties were evaluated by the following methods, and the results are as shown in Table 2 below.

Tensile strength: The tensile strength refers to the degree of resistance of the film tobreaking, and the tensile strength was measured using INSTRON's Universal testing machine 5965 based on the ASTM D882 standard.

Elongation: The elongation was measured using INSTRON's Universal testing machine 5965 based on the ASTM D882 standard.

Tear strength: The tear strength was measured using a Thwing-Albert's Elmendorf tear tester based on the ASTM D1922 standard.

[Table 2]

| | Evaluation items | Example 1 | Example 2 | Example 3 | Example 4 | Example 5 | Example 6 |
|---|---|---|---|---|---|---|---|
| Polymer | MI (g/10 min) | 3 | 2.7 | 3.5 | 3 | 3.3 | 3.1 |
| | PDI | 1.89 | 2.01 | 2.2 | 2.14 | 1.98 | 2.17 |
| | Degree of linearity | 0.53 | 0.38 | 0.49 | 0.36 | 0.33 | 0.65 |
| Film | Tensile strength (kgf/cm$^2$) | 558 | 487 | 523 | 508 | 492 | 560 |
| | Elongation (%) | 470 | 463 | 460 | 455 | 456 | 468 |
| | Tear strength (g/$\mu$m) | 3.4 | 3.1 | 3.4 | 3.1 | 2.8 | 3.5 |

(Table 2 continued)

| | Evaluation items | Comparative Example 1 | Comparative Example2 | Comparative Example 3 | Comparative Example 4 |
|---|---|---|---|---|---|
| Polymer | MI (g/10 min) | 3.4 | 2.8 | 3.1 | 3 |
| | PDI | 2.56 | 3.01 | 2.61 | 2.75 |
| | Degree of linearity | 0.28 | 0.08 | 0.23 | 0.19 |
| Film | Tensile strength (kgf/cm$^2$) | 338 | 301 | 325 | 320 |
| | Elongation (%) | 435 | 428 | 431 | 438 |
| | Tear strength (g/$\mu$m) | 2.4 | 1.1 | 1.7 | 1.3 |

Referring to Table 2 above, it can be confirmed that the polymers in the biodegradable polyester resin compositions according to the examples have a degree of linearity within the range of 0.3 to 0.7 and a PDI of 1.0 to 2.5. It can be confirmed that the biodegradable polyester films according to the examples have better tensile strength, elongation, and tear strength than the biodegradable polyester film according to the comparative examples.

Although preferred embodiments of the present invention have been described in detail, the scope of the rights of the present invention is not limited thereto, and various modifications and improvements made by those skilled in the art using the basic concept of the present invention defined in the following claims also fall within the scope of the present invention.

**Claims**

1.   A biodegradable polyester resin composition comprising a polymer including a residue of a dicarboxylic acid component and a residue of a diol component,

wherein the polymer has a degree of linearity of 0.3 to 0.7 as expressed by the following Equation 1:

[Equation 1]

$$\text{Degree of linearity} = \text{Log}(R_g) / \text{Log}(MM), (R_g \leq 30 \text{ nm})$$

in Equation 1,
$R_g$ is a radius of gyration of the polymer, which is 30 nm or less, and
MM is a molar mass of the polymer.

2. The biodegradable polyester resin composition of claim 1, wherein the polymer has a polydispersity index (PDI) of 1.0 to 2.5.

3.

The biodegradable polyester resin composition of claim 1, wherein the dicarboxylic acid component includes an aromatic dicarboxylic acid having 6 to 12 carbon atoms and an aliphatic dicarboxylic acid having 4 to 10 carbon atoms,
the aromatic dicarboxylic acid having 6 to 12 carbon atoms includes terephthalic acid, isophthalic acid, furandicarboxylic acid, naphthalenedicarboxylic acid, diester derivatives thereof, anhydrides thereof, or mixtures thereof, and
the aliphatic dicarboxylic acid having 4 to 10 carbon atoms includes adipic acid, succinic acid, glutaric acid, azelaic acid, sebacic acid, cyclic fatty acids, diester derivatives thereof, anhydrides thereof, or mixtures thereof.

4. The biodegradable polyester resin composition of claim 1, wherein the dicarboxylic acid component includes 30 mol% to 70 mol% of the aromatic dicarboxylic acid having 6 to 12 carbon atoms and 30 mol% to 70 mol% of the aliphatic dicarboxylic acid having 4 to 10 carbon atoms, based on the total amount of the dicarboxylic acid component.

5. The biodegradable polyester resin composition of claim 1, wherein the diol includes an aliphatic diol having 2 to 10 carbon atoms, and
the aliphatic diol having 2 to 10 carbon atoms includes 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or mixtures thereof.

6. The biodegradable polyester resin composition of claim 1, wherein a molar ratio of the dicarboxylic acid component and the diol component is 1.0:0.8 to 1.0:1.2.

7. The biodegradable polyester resin composition of claim 1, wherein the biodegradable polyester resin composition has a melt flow index (MI) of 10 g/10 min or less as measured at 190 °C under a load of 2.16 kg according to the ASTM D1238 standard.

8. A method of preparing a biodegradable polyester resin composition, comprising:

a first step of preparing a raw material mixture including an aromatic dicarboxylic acid, an aliphatic dicarboxylic acid, and an aliphatic diol;
a second step of reacting the raw material mixture to prepare an oligomer;
a third step of subjecting the oligomer to polycondensation to prepare a prepolymer; and
a fourth step of adding a chain extender to the prepolymer to prepare a polymer, thereby obtaining a biodegradable polyester resin composition,
wherein a moisture content of the raw material mixture in the first step is 3000 ppm or less, and
the polymer prepared in the fourth step has a degree of linearity of 0.3 to 0.7, as expressed by the following Equation 1:

[Equation 1]

$$\text{Degree of linearity} = \text{Log}(R_g) / \text{Log}(MM), (R_g \leq 30 \text{ nm})$$

in Equation 1,
$R_g$ is a radius of gyration of the polymer, which is 30 nm or less, and
MM is a molar mass of the polymer.

9. The method of claim 8, wherein the polymer has a polydispersity index (PDI) of 1.0 to 2.5.

10. The method of claim 8, wherein a particle size dispersion index (SPAN) of the aromatic dicarboxylic acid is 5.0 or less.

11. The method of claim 8, wherein a end-group conversion rate of the oligomer is expressed by the following Equation 2, and the end-group conversion rate is 90% to 100%:

[Equation 2]

$$\text{End-group conversion rate (\%)} = \frac{SV - AV}{SV} \times 100$$

in Equation 2,

AV is an acid value expressed by the following Equation 2-1, and
SV is a saponification value expressed by the following Equation 2-2:

[Equation 2-1]

$$\text{Acid value (AV)} = \frac{0.1 \times A \times P}{W}$$

in Equation 2-1, A is a titration volume (ml) of a 0.1 N sodium hydroxide solution, P is a titer of the 0.1 N sodium hydroxide solution, and W is a mass of the oligomer; and

[Equation 2-2]

$$\text{Saponification value (SV)} = \frac{0.5 \times (C - B) \times Q}{W'}$$

in Equation 2-2, B is a titration volume (ml) of a 0.5 N hydrochloric acid solution (HCl), C is a titration volume (ml) of a blank solution, Q is a titer of the 0.5 N hydrochloric acid solution, and W' is a mass of the oligomer.

12. The method of claim 8, wherein the aromatic dicarboxylic acid is terephthalic acid, isophthalic acid, furandicarboxylic acid, naphthalenedicarboxylic acid, diester derivatives thereof, anhydrides thereof, or combinations thereof, and the aliphatic dicarboxylic acid is adipic acid, succinic acid, glutaric acid, azelaic acid, sebacic acid, cyclic fatty acids, diester derivatives thereof, anhydrides thereof, or combinations thereof.

13. The method of claim 8, wherein the aromatic dicarboxylic acid is included in an amount of 20 mol% to 50 mol% and the aliphatic dicarboxylic acid is included in an amount of 20 mol% to 50 mol%, based on the total number of moles of the raw material mixture.

14. The method of claim 8, wherein the aliphatic diol is 1,4-butanediol, 1,2-butanediol, ethylene glycol, 1,2-propanediol, 1,3-propanediol, 1,5-pentanediol, 1,6-hexanediol, 2,2-dimethyl-1,3-propanediol, cyclic aliphatic diols, or combinations thereof.

15. The method of claim 8, wherein the aliphatic diol is included in an amount of 30 mol% to 60 mol% based on the total number of moles of the raw material mixture.

16. The method of claim 8, wherein a molar ratio of the aromatic dicarboxylic acid and aliphatic dicarboxylic acid and the aliphatic diol is 1.0:0.8 to 1.0:1.2.

17. A biodegradable polyester film obtained by melt-extruding the biodegradable polyester resin composition of any one of claims 1 to 7 using a blown film extruder.

18. A biodegradable polyester film obtained by melt-extruding a biodegradable polyester resin composition prepared by the preparation method of any one of claims 8 to 16 using a blown film extruder.

【Fig. 1】

【Fig. 2】

## INTERNATIONAL SEARCH REPORT

| International application No. |
| --- |
| **PCT/KR2024/007453** |

| A. | CLASSIFICATION OF SUBJECT MATTER |
| --- | --- |

**C08G 63/16**(2006.01)i; **C08G 63/78**(2006.01)i; **C08J 5/18**(2006.01)i

According to International Patent Classification (IPC) or to both national classification and IPC

| B. | FIELDS SEARCHED |
| --- | --- |

Minimum documentation searched (classification system followed by classification symbols)

C08G 63/16(2006.01); B32B 27/10(2006.01); B60C 1/00(2006.01); C08G 63/183(2006.01); C08G 63/78(2006.01); C08G 63/85(2006.01); C08L 67/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디카르복실산(dicarboxylic acid), 디올(diol), 생분해성 폴리에스테르 수지 (biodegradable polyester resin), 테레프탈산(terephthalic acid), 아디프산(adipic acid), 1,4-부탄디올(1,4-butanediol), 분자량 (molecular weight), 다분산지수(polydispersity index)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2022-0159255 A (ECOVANCE CO., LTD.) 02 December 2022 (2022-12-02)<br>See paragraphs [0021]-[0022], [0143], [0197], [0254]-[0262], [0268] and [0381]-[0383]; claim 1; and tables 1-2. | 1-18 |
| A | KR 10-2023-0056491 A (ECOVANCE CO., LTD.) 27 April 2023 (2023-04-27)<br>See entire document. | 1-18 |
| A | KR 10-2015-0079474 A (KOLON INDUSTRIES, INC.) 08 July 2015 (2015-07-08)<br>See entire document. | 1-18 |
| A | KR 10-2014-0065278 A (SAMSUNG FINE CHEMICALS CO., LTD.) 29 May 2014 (2014-05-29)<br>See entire document. | 1-18 |
| A | JP 2021-188038 A (SKC CO., LTD.) 13 December 2021 (2021-12-13)<br>See entire document. | 1-18 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 September 2024** | **11 September 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/007453**

| Patent document cited in search report | | | Publication date (day/month/year) | Patent family member(s) | | | Publication date (day/month/year) |
|---|---|---|---|---|---|---|---|
| KR | 10-2022-0159255 | A | 02 December 2022 | CN | 115386072 | B | 02 April 2024 |
| | | | | EP | 4095180 | A1 | 30 November 2022 |
| | | | | EP | 4095180 | B1 | 14 February 2024 |
| | | | | JP | 2022-181205 | A | 07 December 2022 |
| | | | | JP | 2023-058640 | A | 25 April 2023 |
| | | | | JP | 7291268 | B2 | 14 June 2023 |
| | | | | KR | 10-2023-0058600 | A | 03 May 2023 |
| | | | | KR | 10-2431671 | B1 | 12 August 2022 |
| | | | | KR | 10-2526520 | B1 | 27 April 2023 |
| | | | | KR | 10-2634461 | B1 | 06 February 2024 |
| | | | | US | 11667751 | B2 | 06 June 2023 |
| | | | | US | 11932725 | B2 | 19 March 2024 |
| | | | | US | 2022-0389154 | A1 | 08 December 2022 |
| | | | | US | 2023-0257516 | A1 | 17 August 2023 |
| KR | 10-2023-0056491 | A | 27 April 2023 | KR | 10-2671853 | B1 | 04 June 2024 |
| | | | | WO | 2023-068594 | A1 | 27 April 2023 |
| KR | 10-2015-0079474 | A | 08 July 2015 | WO | 2015-102416 | A1 | 09 July 2015 |
| KR | 10-2014-0065278 | A | 29 May 2014 | CN | 104797625 | A | 22 July 2015 |
| | | | | CN | 104797625 | B | 12 October 2016 |
| | | | | EP | 2924060 | A1 | 30 September 2015 |
| | | | | EP | 2924060 | A4 | 06 July 2016 |
| | | | | EP | 2924060 | B1 | 14 June 2017 |
| | | | | JP | 2015-535542 | A | 14 December 2015 |
| | | | | US | 2015-0299384 | A1 | 22 October 2015 |
| | | | | US | 9464165 | B2 | 11 October 2016 |
| | | | | WO | 2014-081101 | A1 | 30 May 2014 |
| JP | 2021-188038 | A | 13 December 2021 | CN | 113736069 | A | 03 December 2021 |
| | | | | CN | 113736069 | B | 22 September 2023 |
| | | | | EP | 3916036 | A1 | 01 December 2021 |
| | | | | JP | 7282124 | B2 | 26 May 2023 |
| | | | | KR | 10-2021-0147332 | A | 07 December 2021 |
| | | | | KR | 10-2021-0147334 | A | 07 December 2021 |
| | | | | KR | 10-2022-0011817 | A | 03 February 2022 |
| | | | | KR | 10-2022-0015623 | A | 08 February 2022 |
| | | | | KR | 10-2022-0063901 | A | 18 May 2022 |
| | | | | KR | 10-2410615 | B1 | 17 June 2022 |
| | | | | KR | 10-2410620 | B1 | 17 June 2022 |
| | | | | KR | 10-2421034 | B1 | 14 July 2022 |
| | | | | KR | 10-2421044 | B1 | 14 July 2022 |
| | | | | KR | 10-2527599 | B1 | 02 May 2023 |
| | | | | US | 2021-0380757 | A1 | 09 December 2021 |
| | | | | WO | 2021-241931 | A1 | 02 December 2021 |

Form PCT/ISA/210 (patent family annex) (July 2022)

**EP 4 737 501 A1**

**Patent documents cited in the description**

- KR 1020230085267